# EUROPÄISCHE PATENTSCHRIFT

(11) **EP 1 457 769 B1**
(45) Veröffentlichungstag und Bekanntmachung des Hinweises auf die Patenterteilung: **17.01.2007**
(21) Anmeldenummer: 03027194.4
(22) Anmeldetag: 27.11.2003
(51) Int. Cl.: G01N 19/02

(54) **Verfahren zum Herstellen von Brems-oder Kupplungsbelägen**
Process for manufacturing friction linings for brakes and clutches
Procédé de fabrication des garnitures de frein ou d'embayage

(30) Priorität: 03.03.2003 DE 10309193
(43) Veröffentlichungstag der Anmeldung: 15.09.2004
(73) Patentinhaber: TMD Friction Services GmbH, 51381 Leverkusen (DE)
(72) Erfinder: Hogenkamp, Wolfgang, 42855 Remscheid (DE)
(74) Vertreter: Müller, Eckhard

(56) Entgegenhaltungen:
- EP-A- 0 163 030
- EP-A- 0 915 070
- US-A1- 2002 046 789
- US-A1- 2003 047 285
- KALPAKJIAN: "Manufacturing Engineering and Technology" 1992, ADDISON-WESLEY PUBLISHING COMPANY , READING, MASSACHUSETTS , XP002313275 * Seite 1069 - Seite 1071 *
- Borg-Warner drg. 04-72-591-002M, Invoice no. 066/3001, Procees Flow Charts 0472591002M, 0472235002F, 0472091002P XP002313274
- PATENT ABSTRACTS OF JAPAN Bd. 016, Nr. 302 (M-1275), 3. Juli 1992 (1992-07-03) & JP 04 083927 A (AKEBONO BRAKE RES & DEV CENTER LTD), 17. März 1992 (1992-03-17)

## Beschreibung

Die Erfindung betrifft ein Verfahren zum Herstellen von Brems- oder Kupplungsbelägen, die einen Reibbelag aufweisen, der vorzugsweise auf einer Belagträgerplatte angeordnet ist, ggf. unter Zwischenschaltung einer Zwischenschicht.

Brems- und Kupplungsbeläge bestehen in der Regel aus einer Trägerplatte und einem Reibbelag. Häufig ist eine Zwischenschicht zwischengeschaltet, die die Haftung des Reibbelags auf der Trägerplatte verbessert. Im Gespräch sind allerdings auch bereits Brems- und Kupplungsbeläge, die lediglich aus einem Reibbelag bestehen.

Die Reibbeläge werden in der Regel aus harzgebundenen Schüttmassen hergestellt. Die Ausformung der Schüttmassen erfolgt in einer Preßform. Anschließend werden die Reibbeläge gehärtet, und zwar unter Einwirkung von Druck und Temperatur. Bei einer Temperatur von ca. 230 °C vernetzen die üblicherweise als Bindemittel eingesetzten Phenolharze und bilden Phenolharzbrücken. Die Reibbeläge erhalten dabei ihre Endfestigkeit.

An das Härten können sich weitere Verfahrensschritte anschließen, wie etwa Flachschleifen zum Einstellen der vorgegebenen Belagdicke, Scorchen zum Wärmebehandeln und Präparieren der Reibfläche, Spezialschleifen zum Erzeugen einer vorgegebenen Konturierung (Nuten, abgeschrägte Kanten), Anpassen der Temperatur und Erzeugen eines Korrosionsschutzes, beispielsweise durch Aufbringen von Pulverlack.

Die fertigen Brems- und Kupplungsbeläge werden einer Endkontrolle unterworfen, um etwaigen Ausschuß aussondern zu können. Auch liefert die Endkontrolle Informationen für die Prozeßsteuerung.

Aus EP-A-0 915 070 ist ein Verfahren zum Herstellen von Bremsbelägen bekannt, wobei zwischen Verfahrenschritten die Bremsbeläge geprüft wird.

Der Erfindung liegt die Aufgabe zugrunde, die Produkt-und Prozeßüberwachung sowie -steuerung zu verbessern Zur Lösung dieser Aufgabe schafft die Erfindung ein Verfahren zum Herstellen von Brems- oder Kupplungsbelägen nach Anspruch 1.

Es handelt sich also um einen verknüpften Fertigungsprozeß, bei dem die Produkte nach jedem Verfahrensschritt geprüft werden. Fehler in der Verfahrensführung können an Ort und Stelle erfaßt werden, so daß ein sofortiger Eingriff in die Prozeßführung möglich ist. Die Prozeßsteuerung läßt sich also optimieren, und zwar mit dem Ergebnis, daß Produkte höchster Qualität mit einem Minimum an Ausschuß produziert werden können. Der erforderliche Aufwand ist vergleichsweise gering, da die Normschnittstellen von gleicher Bauart sein können, wobei ohne weiteres ein gegenseitiger Austausch möglich ist. Letzteres gilt in besonders vorteilhafter Weise auch für die Module. Der Fertigungsprozeß ist also hoch flexibilisiert.

In Weiterbildung der Erfindung wird vorgeschlagen, daß in jeder Normschnittstelle mindestens einer der folgenden Meßwerte der Brems- oder Kupplungsbeläge erfaßt und mit einem Sollwert verglichen wird:
- Masse/Gewicht
- Transportlage
- Dimension (Dicke, Funktionsmaße)
- Reibwerkstoff
- Temperatur
- Transportgeschwindigkeit
- Stückzahl.

Bei korrekter Ausbildung der Trägerplatte und korrekter Zusammensetzung der Zwischenschicht und des Reibbelags besitzt jeder Brems- und Kupplungsbelag eine definierte Masse, die allerdings vom Verfahrensstand abhängig ist. Bewegt man den Belag während des ohnehin erforderlichen Transports mit einer definierten Geschwindigkeit gegen eine Barriere, beispielsweise gegen eine Umlenkstelle, so kann der Masseimpuls über einen Sensor, etwa über einen Beschleunigungssensor, ein Körperschallmikrophon oder einen Erschütterungssensor, erfaßt und mit einem den Sollwert repräsentierenden Referenzsignal verglichen werden. Setzt man einen Erschütterungssensor ein, kann auch die korrekte Funktion von Maschinenteilen überwacht werden. Eine Gewichtsmessung kann die Erfassung des Masseimpulses ersetzen oder ergänzen.

Die Erfassung der Transportlage gibt Aufschluß darüber, ob die Werkstückübergabe vom vorausgehenden Modul auf das zum nächstfolgenden Modul führende Transportsystem korrekt abgewickelt worden ist.

Bereits bei der Formgebung der Reibmaterialien gilt es, vorgegebene Dimensionen einzuhalten, hier die Dicke und die Kontur des Reibbelags und ggf. der Zwischenschicht. Auch die Abmaße der Trägerplatte bedürfen einer Überprüfung. Die Dimensionen des Reibbelages ändern sich im Zuge der Weiterbearbeitung. Dies gilt nicht nur für die Dicke, sondern auch für die Auswirkungen eines Sonderschliffs zur Erzeugung von Schrägen und Nuten. Als Sensoren kommen Kämme infrage, die im Kippwinkel verstellbar sind und über das Werkstück streichen, ferner analoge Näherungsschalter, Leuchttaster, Abweiser, die die Beläge in die gewollte Position drücken und deren Erfolg von einem Taster bestätigt wird, o.dgl. Lichtschranken, (Diode/Lasers) können bei bekannter Transportgeschwindigkeit ein grobes Raster der Konturen liefern. Eine Lichtschrankenreihe ergibt in Abhängigkeit von der Teilegeometrie ein festes digitales Datenmuster, das mit einem Referenzmuster verglichen wird. Geometrische Daten können zum Teil aber auch von der Sensorik "Masseimpuls" und "Gewicht" indirekt gemessen werden. Die Verknüpfung von geometriebedingten Daten und Masseimpuls läßt hochwertige Ergebnisse erwarten.

Beim Reibwerkstoff kommt es auf dessen Zusammensetzung sowie auf die Homogenität und Fehlerfreiheit des Reibbelags an. Beispielsweise können die Werkstücke im Zuge des ohnehin erforderlichen Transports auf eine Platte fallengelassen werden. Das Klangbild wird aufgenommen und mit einem Referenzsignal verglichen. Dabei registriert das System Risse, Kantenlösen, Blasen, poröse Bereiche, Fehler in der Materialzusammensetzung u.dgl.

Zusätzlich oder alternativ besteht die Möglichkeit, die elektrischen und/oder magnetischen Eigenschaften der Werkstücke zu erfassen. Dies kann beispielsweise kapazitiv oder induktiv erfolgen. Ggf. genügt ein Elektromagnet, der in geringem Abstand über das Werkstück geführt wird. Die Erfassung der elektrischen und oder magnetischen Eigenschaften liefert materialspezifische Daten, aus denen sich Rückschlüsse auf die Zusammensetzung der Belagträgerplatte und der Reibstoffe ziehen lassen. Auf diese Weise ist bereits eine Prüfung der Materialien vor der Formgebung möglich. Ferner können die Materialien und Werkstücke mit Ultraschall durchstrahlt werden. Der Grad der Abschwächung der eingespeisten Signale läßt Rückschlüsse auf Blasen, Risse oder Inhomogenitäten zu.

Der Erfassung der Temperatur kommt eine wesentliche Bedeutung zu. Bei kontinuierlicher Fahrweise der Anlage stellen sich an definierten Punkten bestimmte Werkstücktemperaturen (Gleichgewichtszustand) ein. Dies gilt vor allen Dingen für den Auslaß derjenigen Modulen, in denen die Werkstücke einer Erwärmung unterworfen werden. Veränderungen der Temperatur deuten auf Störungen hin, sei es daß die Anlage Falschluft zieht, Heizkreise ausgefallen sind oder Beläge im Einlauf zu kalt sind. Temperatursensoren können auf Gefahren durch Überhitzung hinweisen. Die Temperatur der Beläge kann auch berührungslos durch Messen der Strahlung erfaßt werden. Die Vielzahl der Einzelmessungen führt unter Anwendung der Regeln der Fuzzy-Logik zu präzisen Ergebnissen. Auch kann man die Lufttemperatur in und außerhalb der Maschine messen sowie die Temperatur von Maschinenteilen durch Kontaktmessung erfassen.

Wie bereits erwähnt, kommt der Erfassung der Transportgeschwindigkeit dann eine Bedeutung zu, wenn die Kontur der Werkstücke über Fotozellen o.dgl. geprüft wird. Gleiches gilt für eine entsprechende Prüfung der Transportlage der Werkstücke. Hand in Hand hiermit geht eine Erfassung der Transportzeit. In einer definierten Zeit muß eine bestimmte Anzahl von Belägen durch die Anlage gefördert werden. Wenn kein Puffer vorhanden ist, müssen alle Taktzeiten (Handhabungseinrichtungen und Fertigungsoperationen) synchronisiert werden. Weicht eine Taktzeit ab, müssen alle vorgelagerten zeitgebundenen Arbeitsgänge entsprechend folgen. Die Taktzeit steht in direktem Zusammenhang mit der Transportgeschwindigkeit und der Stückzahl.

Vorzugsweise wird in mindestens einer der Normschnittstellen der Reibwert der Reibbeläge erfaßt und mit einem Sollwert verglichen. Der Reibwert stellt ohne Frage einen zentralen Meßwert bei der Herstellung der Brems- und Kupplungsbeläge dar. Zu seiner Erfassung können die Beläge mit ihrer Reibseite über eine Auflagefläche (beispielsweise die der ohnehin eingesetzten Waage) gezogen werden, wobei man die hierfür erforderliche Kraft erfaßt. Diese in Verbindung mit dem Gewicht der Beläge gibt Aufschluß über den jeweiligen Reibwert. Möglich ist auch eine Erfassung der Zeit, die die Werkstücke benötigen, um eine definierte Strecke einer geneigten Rutsche zu passieren.

Erfindungsgemäß wird vorgeschlagen, in jeder Normschnittstelle sowohl abgabe- als auch aufnahmeseitige Messungen durchzuführen. Dies erhöht nicht nur die Redundanz, sondern läßt auch eine Überwachung der Funktion der Meßanordnungen zu.

In wesentlicher Weiterbildung der Erfindung wird vorgeschlagen, daß in mindestens einem der Modulen mindestens einer der folgenden Meßwerte erfaßt und mit einem Sollwert verglichen wird:
- Betriebstemperatur des Moduls
- Betriebszeit pro Charge
- Stückzahl pro Charge.

Der Betriebszustand der Modulen kann also in die Prozeßüberwachung und damit in die Prozeßsteuerung einbezogen werden, was letzterer zu Gute kommt.

In wesentlicher Weiterbildung der Erfindung wird vorgeschlagen, daß ein Modul "Spannen und Härten" elektrisch betrieben wird und daß die Temperatur der Brems- oder Kupplungsbeläge sowie mindestens einer der folgenden Meßwerte erfaßt und mit Sollwerten verglichen werden:
- Strom
- Spannung
- Leistung
- elektrischer Widerstand
- Zuspannkraft der Elektroden.

Ferner wird in wesentlicher Weiterbildung der Erfindung vorgeschlagen, daß ein Modul "Scorchen" elektrisch betrieben wird und daß die Temperatur der Brems- oder Kupplungsbeläge sowie mindestens einer der folgenden Meßwerte erfaßt und mit Sollwerten verglichen werden:
- Strom
- Spannung
- Leistung
- elektrischer Widerstand
- Zuspannkraft der Elektroden.

Während das Härten, wie erwähnt, bei Temperaturen um 230°C stattfindet, sind für das Scorchen Temperaturen von 450°C bis 750°C erforderlich.

Diesen Weiterbildungen der Erfindung liegt die Erkenntnis zugrunde, daß sich die elektrischen Eigenschaften der Reibbeläge während des Erwärmens ändern. Diese Eigenschaftsänderungen sind material-/produktspezifisch und können erfaßt sowie ausgewertet werden.

Erwärmt man einen Reibbelag durch Stromeinleitung, dann nimmt dessen Eigenwiderstand ab. Der Belag zeigt die Charakteristik eines Heißleiters. Daraus ist zu schließen, daß hauptsächlich die kohlenstoffhaltigen Bestandteile eines Reibbelages seine ohmschen Eigenschaften bestimmen. Die im Reibmaterial enthaltenen Metalle hingegen sind Kaltleiter, deren elektrischer Widerstand bei Erwärmung ansteigt. Die resultierende Widerstandsänderung über der Zeit läßt also Rückschlüsse auf die Materialzusammensetzung zu.

Allerdings ist die Temperatur nur einer der auf den elektrischen Widerstand der Beläge einwirkenden Parameter. Hinzu kommt das Verhältnis von Reibbelag zu Zwischenschicht, ferner die Dimension des Belages (stromdurchflossener Querschnitt; Dicke) und schließlich auch die Zuspannkraft der Elektroden. Da eine Erhöhung der Zuspannkraft den elektrischen Widerstand senkt, ist davon auszugehen, daß die Zuspannkraft die stromleitenden Brücken innerhalb des Belag-Porengerüstes beeinflußt.

Jeder Belagserie ist also eine typische Widerstandscharakteristik zuzuordnen. Somit kann die an Referenzbelägen aufgenommene Widerstandskurve mit den Kurven von in Serie laufenden Teilen verglichen werden. Je nach Temperaturbereich können aus den Kurvenabschnitten unterschiedliche Informationen gewonnen werden. Grundsätzlich deuten Abweichungen von der Referenzkurve auf folgende Fehlerursachen hin:
- abweichende Belagdimensionen,
- Fehlen der Zwischenschicht oder der Reibmaterialschicht
- Vertauschen der Schichten
- unregelmäßige Verteilung der Zwischenschicht
- falsche Materialmischungen
- Inhomogenitäten.
   Von Bedeutung ist, daß die Meßwerterfassung und
- auswertung während des Verfahrensablaufs erfolgen kann, ohne letzteren zu behindern.

Es wurde gefunden, daß mit steigender Temperatur der Energiebedarf, der erforderlich ist, um die Temperatursteigerung über der Zeit konstant zu halten, überproportional ansteigt. Dies ist darauf zurückzuführen, daß Phasenumwandlungsprozesse instabiler Belagbestandteile auftreten. Mit steigender Temperatur kommt es zu Änderungen des Aggregatzustandes und zu einem sehr intensiven Ausgasen.

Je nach Zusammensetzung ergibt sich also für jede Belagart ein spezieller Energiebedarf über der Temperatur. Dieser spezifische Energiebedarf ist ein Maß für eine erfolgte Phasenumwandlung bestimmter Reibbelagkomponenten. Diese Umwandlung kann erwünscht oder unerwünscht sein.

Die erfaßte Energiebedarfsänderung über der Temperatur stellt also ein weiteres belagspezifisches Merkmal dar, das insbesondere Aufschluß über den Status der chemischen Reaktionen innerhalb der Reibstoffmatrix gibt.

Dabei besteht durchaus die Möglichkeit, spezifische, kalibrierte Prüfmethoden und -geräte zu entwickeln, die neben den Phasenumwandlungspunkten auch Aussagen über die Reaktionskinetik erlauben.

Die obigen Verfahrensschritte sind anwendbar auf alle leitfähigen Verbundwerkstoffe, seien sie harzgebunden oder nicht. Auch läßt sich über die elektrischen Eigenschaften eine vom Fertigungsverfahren unabhängige Prüfung durchführen.

Wie erwähnt, kommt es mit steigender Temperatur zu einem an Intensität zunehmenden Ausgasen. Es entsteht Qualm, und es können sich sogar Flammen bilden. Letzteres ist beim Härten unzulässig, beim Scorchen jedoch unter Umständen zulässig. Der Qualm wird abgesaugt, und es wird temperierte Zuluft zugeführt. Auch aus diesen Vorgängen lassen sich Indizien für den ordnungsgemäßen oder gestörten Prozeßverlauf ableiten, vorzugsweise in Kombination mit Messungen des Verbrauchs an elektrischer Energie und Temperaturmessungen (letzteres ggf. über IR-Messungen).

In Weiterbildung der Erfindung wird daher vorgeschlagen, daß in den Modulen "Spannen und Härten" und "Scorchen" zusätzlich mindestens einer der folgenden Meßwerte erfaßt und mit einem Sollwert verglichen wird:
- Qualm
- Feuer
- Zulufttemperatur
- Unterdruck.
   Vorteilhafterweise werden die Funktionen der Normschnittstellen und der Modulen durch Videokameras überwacht. Bildverarbeitende Systeme stellen für das Bedienpersonal eine sinnvolle Ergänzung der übrigen Sensorik dar. Daneben erhält der Bediener einen direkten Einblick in die Komponenten der Anlage. Er kann also gemeldete Fehler (unzulässiges Feuer, gerissenes Transportband u. dgl.) einer direkten Prüfung unterziehen, ohne daß die ggf. temperierten Anlagenaggregate geöffnet werden müßten. Eine Videoüberwachung ist insbesondere in der Hochlaufphase der Anlage sinnvoll.
   Vorzugsweise werden die erfaßten Daten zusammengeführt und gemeinsam verarbeitet. Dies geschieht vom Beginn der Fertigungslinie bis zu deren Ende. Eine Reihe von Sensoren geben nur ein ungefähres, "unscharfes" Bild des Anlagen- und Produktzustandes. Auch werden andere, zum Teil ebenfalls "unscharfe" Daten geliefert, die für das Produkt selbst nicht unmittelbar entscheidend sind, zum Beispiel Qualm beim Scorchen und Härten. Im Zusammenhang mit anderen Daten ergibt sich jedoch ein abgerundetes Bild der Prozesse. Zum Beispiel läßt sich aus den Meßwerten Qualm, Temperatur und Härtestrom die Information einer erfolgreichen Härtung ableiten. Die Meßwerte Qualm und Temperatur ohne Härtestrom weisen hingegen auf einen Defekt im System hin. Ergibt die Datenverarbeitung Werte, die mit den Vorgaben übereinstimmen, so können diese sofort "vergessen" werden. Nur Datensätze, die zur Zertifizierung des Produkts erforderlich sind, werden gespeichert. Verarbeitet werden logische Datenverknüpfungen sowie das Verhältnis der gewonnen Daten zueinander. Die Module, Modulketten und Normschnittstellen werden über eine Fuzzy-Logik gesteuert, wobei das System lernfähig ist. Das System dient der
- Prozeßüberwachung und -regelung
- Materialflußsteuerung
- Sicherheit (Kollisionsschutz)
- Qualitätsprüfung und Fertigungsmeßtechnik
- Schadensfrüherkennung und Fehlerdiagnose.

Die Erfindung wird im folgenden anhand eines bevorzugten Ausführungsbeispiels im Zusammenhang mit der beiliegenden Zeichnung näher erläutert. Die Zeichnung zeigt in:

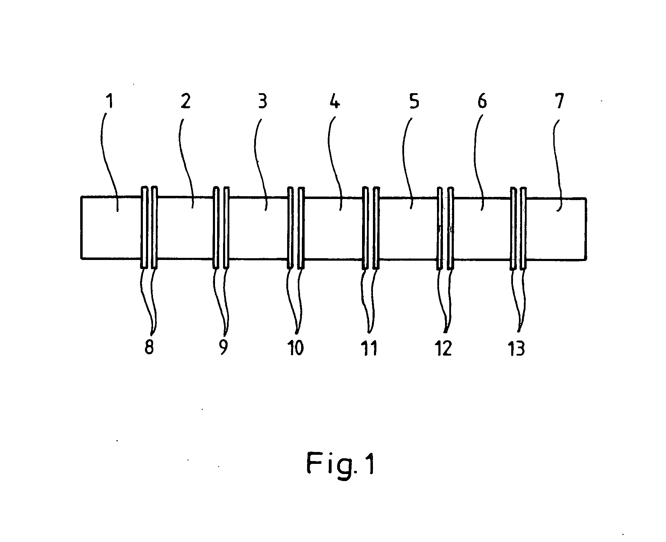

Figur 1 in schematischer Darstellung den Aufbau einer Anlage zum Herstellen von Bremsbelägen.

Die Anlage besteht aus Modulen 1 bis 7, die in Reihe geschaltet und durch Normschnittstellen 8 bis 13 miteinander verbunden sind.

Der Modul 1 dient der Formgebung. Hier wird eine Belagträgerplatte mit einer Zwischenschicht und einer Reibmaterialschicht verpreßt. Dabei wird die Belagträgerplatte auf Lage, Maßhaltigkeit, Beschichtung, Rauhigkeit, Prägung, Dicke und Gewicht geprüft. Außerdem erfolgt eine Prüfung der Materialmischungen auf Einwage, Farbe und Eisengehalt. Ferner werden die Formgebungskraft, die Formgebungszeit und die Radialkraft erfaßt.

Der Modul 2 dient dem Spannen und Härten der Bremsbeläge. Dabei werden deren Dicke, Temperatur und Schrumpfmaß erfaßt. Die Erwärmung der Reibmaterialien erfolgt elektrisch, und geeignete Sensoren erfassen Strom, Spannung, Leistung, elektrischen Widerstand und Spannkraft der Elektroden. Ferner werden die Betriebszeit pro Charge, die Stückzahl pro Charge und der Unterdruck sowie die zulufttemperatur gemessen. Ein spezieller Sensor zeigt das Auftreten von Qualm, und/oder Feuer an.

Der Modul 3 dient dem Flachschleifen der Bremsbeläge. Erfaßt werden Schleifmaß, Stückzahl pro Charge, Betriebszeit pro Charge und Solldrehzahl.

Im Modul 4, in welchem die Bremsbeläge gescorcht werden, erfaßt man die Temperatur und die Dicke der Werkstücke sowie deren Stückzahl pro Charge, ferner die Zulufttemperatur, die Betriebszeit pro Charge, den Unterdruck und das auftreten von Qualm/Feuer. Das Scorchen erfolgt ebenfalls unter elektrischer Erwärmung, wobei dieselben diesbezüglichen Kennwerte wie im Modul 2 (Härten) erfaßt werden.

Im Modul 5 erfolgt ein Spezialschleifen, bei dem Kantenabschrägungen, Nuten u. dgl. erzeugt werden. Man erfaßt Schleifmaß, Stückzahl pro Charge, Betriebszeit pro Charge und Solldrehzahl.

Der Modul 6 dient der Temperaturanpassung, und zwar unter Erfassung der Stückzahl pro Charge, der Betriebszeit pro Charge und der Werkstücktemperatur. Die Werkstücke werden mit warmen oder kalten Platten in Berührung gebracht. Außerdem werden sie sandgestrahlt und anschließend entstaubt.

Der Modul 7 schließlich dient dem Korrosionsschutz. Erfaßt werden die Temperatur der Werkstück, deren Stückzahl pro Charge sowie die Betriebszeit pro Charge. Das Aufbringen von Pulverlack wird über eine spezielle Sensorik überwacht.

Den Abschluß des Moduls 7 bildet eine Endkontrolle unter Erfassung von Temperatur, Transportlage, Transportgeschwindigkeit und Stückzahl.

Die Normschnittstellen 8 bis 13 weisen ein und denselben Grundaufbau auf, wobei sie für den Transport von Modul zu Modul zuständig sind und außerdem durch entsprechende Messungen den korrekten Verfahrensablauf der vorgeschalteten Modulen kontrollieren. Hierzu weisen sie jeweils eine abgabeseitige und eine aufnahmeseitige Sensorik auf. Dies erhöht die Redundanz der Messungen und kontrolliert gleichzeitig die Funktion der Sensorik.

Sämtliche Normschnittstellen erfassen Masse/Gewicht, Transportlage, Dimension (Dicke, Funktionsmasse) Reibwerkstoff, Temperatur und Transportgeschwindigkeit der Werkstücke. Mindestens eine der Normschnittstellen ist ferner mit einem Sensor zum Messen des Reibwertes versehen.

In den Modulen 2 und 4 erfolgt, wie erwähnt, eine elektrische Beheizung der Werkstücke. Die zugehörige Sensorik ist in der Lage, den temperaturabhängigen elektrischen Energiebedarf zu ermitteln, der erforderlich ist, im die Temperatur linear ansteigen zu lassen. Die nachstehende Tabelle gibt die in einem Versuchsaufbau ermittelten Werte an.

| **Temperatur in°C** | **el. Widerstand in Ω** | **el. Leistung in W** | **el. Spannung in V** |
|---|---|---|---|
| | | | |
| 230 | 0,053 | 475 | 5 |
| 400 | 0,029 | 850 | 5 |
| 500 | 0,022 | 1150 | 5 |
| 670 | 0,011 | 2250 | 5 |

Eklatant ist der sprunghafte Anstieg des Leistungsbedarfs im Temperaturbereich von 500°C bis 670°C. Höhere Werte konnten nicht gemessen werden, da die Stromquelle des Versuchsaufbaus auf 450A begrenzt war.

Der Leistungsbedarf in Abhängigkeit von der Temperatur stellt einen spezifischen Materialwert dar, der ferner abhängig ist von der Dimension des Reibbelags sowie von der Zuspannkraft der Elektroden.

Sämtliche ermittelten Meßwerte werden in einer Datenverarbeitungsanlage zusammengefaßt und mit zugehörigen sollwerten verglichen. Auf diese Weise ergibt sich ein vollständiges Bild des Verfahrensablaufs und der Produkteigenschaften. Der Prozeß läßt sich vorzüglich überwachen und regeln. Es entstehen Produkte höchster Qualität unter Minimierung des Ausschusses. Letzteres ist vor allen Dingen darauf zurückzuführen, daß Fehlfunktionen direkt bei ihrem Auftreten erkannt und sofort eliminiert werden können.

Nach Figur 1 sind die Modulen unter Zwischenschaltung der Normschnittstellen örtlich direkt aneinander anschließend gezeigt. Dies ist keine zwingende Voraussetzung. Vielmehr sind räumliche Abstände der Modulen wie auch zeitliche Intervalle im Verfahrensablauf möglich.

## Patentansprüche

1. Verfahren zum Herstellen von Brems- oder Kupplungsbelägen, die einen Reibbelag aufweisen, wobei
- eine Mehrzahl von Modulen (1-7) zur Durchführung jeweils mindestens eines Verfahrensschrittes vorgesehen wird,
- die Modulen in Reihe hintereinander geschaltet werden,
- zwischen benachbarten Modulen jeweils eine die Module jeweils verbindende Normschnittstelle (8-13) zur Übergabe der Brems- oder Kupplungsbeläge an das nachfolgende Modul mit sowohl einer abgabeseitigen als auch einer aufnahmeseitigen Sensorik vorgesehen wird und
- jeder Brems- oder Kupplungsbelag in jeder Normschnittstelle auf ein korrektes Ergebnis der Durchführung des vorhergehenden Verfahrensschrittes geprüft wird, wobei mit Hilfe der abgabe- und aufnahmeseitigen Sensorik sowohl abgabe- als auch aufnahmeseitige Messungen durchgeführt werden.

2. Verfahren nach Anspruch 1, **dadurch gekennzeichnet, daß** in jeder Normschnittstelle mindestens einer der folgenden Meßwerte der Brems- oder Kupplungsbeläge erfaßt und mit einem Sollwert verglichen wird:
- Masse/Gewicht
- Transportlage
- Dimension (Dicke, Funktionsmaße)
- Reibwerkstoff
- Temperatur
- Transportgeschwindigkeit
- Stückzahl.

3. Verfahren nach Anspruch 2, **dadurch gekennzeichnet, daß** in mindestens einer der Normschrittstellen der Reibwert der Reibbeläge erfaßt und mit einem Sollwert verglichen wird.

4. Verfahren nach einem der Ansprüche 1 bis 3, **dadurch gekennzeichnet, daß** in mindestens einem der Modulen mindestens einer der folgenden Meßwerte erfaßt und mit einem Sollwert verglichen wird:
- Betriebstemperatur des Moduls
- Betriebszeit pro Charge
- Stückzahl pro Charge.

5. Verfahren nach einem der Ansprüche 1 bis 4, **dadurch gekennzeichnet, daß** ein Modul "Spannen und Härten" elektrisch betrieben wird und daß dort die Temperatur der Brems- oder Kupplungsbeläge sowie mindestens einer der folgenden Meßwerte erfaßt und mit Sollwerten verglichen werden:
- Strom
- Spannung
- Leistung
- elektrischer Widerstand
- Zuspannkraft der Elektroden.

6. Verfahren nach einem der Ansprüche 1 bis 5, **dadurch gekennzeichnet, daß** ein Modul "Scorchen" elektrisch betrieben wird und daß die Temperatur der Brems- oder Kupplungsbeläge sowie mindestens einer der folgenden Meßwerte erfaßt und mit Sollwerten verglichen werden:
- Strom
- Spannung
- Leistung
- elektrischer Widerstand
- Zuspannkraft der Elektroden.

7. Verfahren nach Anspruch 5 oder 6, **dadurch gekennzeichnet, daß** zusätzlich mindestens einer der folgenden Meßwerte erfaßt und mit einem Sollwert verglichen wird:
- Qualm
- Feuer
- Zulufttemperatur
- Unterdruck.

8. Verfahren nach einem der Ansprüche 1 bis 7, **dadurch gekennzeichnet, daß** die Funktionen der Normschnittstellen und der Modulen durch Videokameras überwacht werden.

9. Verfahren nach einem der Ansprüche 1 bis 8, **dadurch gekennzeichnet, daß** die erfaßten Daten zusammengeführt und gemeinsam verarbeitet werden.

## Claims

1. Method of producing brake or clutching linings having a friction lining, wherein
- a plurality of modules (1 - 7) for performance of at least one method step is provided,
- the modules are connected in series,
- provided between adjacent modules is a respective standard interface (8 - 13), which connects the respective modules, for transfer of the brake linings or clutch linings to the succeeding module with a sensor system not only at the output side, but also at the input side, and
- each brake lining or clutch lining is checked in each standard interface for a correct result of the performance of the preceding method step, wherein with the help of the sensor systems at the output and input sides measurements are carried out not only at the output side, but also at the receiving side.

2. Method according to claim 1, **characterised in that** in each standard interface at least one of the following measurement values of the brake linings or clutch linings is detected and compared with a target value:
- mass/weight
- transport position
- dimension (thickness, functional size)
- friction material
- temperature
- transport speed
- batch number

3. Method according to claim 2, **characterised in that** in at least one of the standard interfaces the coefficient of friction of the friction linings is detected and compared with a target value.

4. Method according to one of claims 1 to 3, **characterised in that** in at least one of the modules at least one of the following measurement values is detected and compared with a target value:
- operating temperature of the module
- operating time per charge
- process rate per charge.

5. Method according to one of claims 1 to 4, **characterised in that** a module 'tensioning and hardening' is operated electrically and that there the temperature of the brake linings or clutch linings as well as at least one of the following measurement values are detected and compared with target values:
- current
- voltage
- power
- electrical resistance
- tension force of the electrodes.

6. Method according to one of claims 1 to 5, **characterised in that** a module 'scorching' is electrically operated and that the temperature of the brake linings or clutch linings as well as at least one of the following measurement values are detected and compared with target values:
- current
- voltage
- power
- electrical resistance
- tension force of the electrodes.

7. Method according to claim 5 or 6, **characterised in that** in addition at least one of the following measurement values is detected and compared with a target value:
- dense smoke
- fire
- supplied air temperature
- underpressure.

8. Method according to one of claims 1 to 7, **characterised in that** the functions of the standard interfaces and of the modules are monitored by video cameras.

9. Method according to one of claims 1 to 8, **characterised in that** the detected data are collated and processed conjointly.

## Revendications

1. Procédé de fabrication de garnitures de frein ou d'embrayage qui présentent une garniture de friction, dans lequel
- une pluralité de modules (1-7) sont prévus pour réaliser respectivement au moins une étape de procédé,
- les modules sont commutés en série les uns derrière les autres,
- on prévoit entre des modules voisins respectivement une interface normalisée (8-13) reliant respectivement les modules et destinée à transmettre les garnitures de frein ou d'embrayage au module suivant avec une analyse sensorielle tant côté émission que côté réception, et
- pour chaque garniture de frein ou d'embrayage, on vérifie dans chaque interface normalisée un résultat correct de la réalisation de l'étape de procédé précédente, des mesures étant réalisées à l'aide de l'analyse sensorielle côté émission et côté réception, tant côté émission que côté réception.

2. Procédé selon la revendication 1, **caractérisé en ce que** dans chaque interface normalisée, on enregistre au moins une des valeurs de mesure suivantes des garnitures de frein et d'embrayage et on la(les) compare à une valeur théorique :
- masse/poids,
- position de transport,
- dimension (épaisseur, côtes de fonctionnement),
- matériau de frottement,
- température,
- vitesse de transport,
- nombre de pièces.

3. Procédé selon la revendication 2, **caractérisé en ce que** dans au moins une des interfaces de normalisation, on enregistre la valeur de friction des garnitures de friction et on la compare à une valeur théorique.

4. Procédé selon l'une des revendications 1 à 3, **caractérisé en ce que** dans au moins un des modules, on enregistre au moins une des valeurs de mesure suivantes et on la(les) compare à une valeur théorique :
- température de fonctionnement du module,
- durée de fonctionnement par charge,
- nombre de pièces par charge.

5. Procédé selon l'une des revendications 1 à 4, **caractérisé en ce qu'**un module « Tension et durcissement » est entraîné par voie électrique, et **en ce que** l'on y enregistre la température des garnitures de frein ou d'embrayage, ainsi qu'au moins une des valeurs de mesure suivantes, et qu'on les compare à une valeur théorique :
- courant,
- tension,
- puissance,
- résistance électrique,
- force d'application des électrodes.

6. Procédé selon l'une des revendications 1 à 5, **caractérisé en ce qu'**un module « Grillage» est entraîné par voie électrique, et **en ce que** l'on y enregistre la température des garnitures de frein ou d'embrayage, ainsi qu'au moins une des valeurs de mesure suivantes et qu'on les compare à une valeur théorique :
- courant,
- tension,
- puissance,
- résistance électrique,
- force d'application des électrodes.

7. Procédé selon la revendication 5 ou 6, **caractérisé en ce qu'**on enregistre en outre au moins une des valeurs de mesure suivantes et qu'on la compare à une valeur théorique :
- fumée,
- feu,
- température d'amenée,
- dépression.

8. Procédé selon l'une des revendications 1 à 7, **caractérisé en ce que** les fonctions des interfaces normalisées et des modules sont surveillées par des caméras vidéo.

9. Procédé selon l'une des revendications 1 à 8, **caractérisé en ce que** les données enregistrées sont rassemblées et traitées conjointement.
